# EUROPEAN PATENT APPLICATION

(11) **EP 4 722 657 A1**
(43) Date of publication of application: **08.04.2026**
(21) Application number: 24814939.5
(22) Date of filing: 22.03.2024
(51) Int. Cl.: G01D 3/00, G01L 19/06

(54) **COMPUTATION DEVICE, PRESSURE MEASUREMENT DEVICE, COMPUTATION METHOD, AND COMPUTATION PROGRAM**

(30) Priority: 30.05.2023 JP 2023088450
(71) Applicant: Horiba Stec, Co., Ltd., Kyoto-shi, Kyoto 601-8116 (JP)
(72) Inventor: HAMADA, Chihiro, Kyoto-shi, Kyoto 601-8116 (JP); KANDORI, Satsuki, Kyoto-shi, Kyoto 601-8116 (JP)
(74) Representative: Müller-Boré & Partner Patentanwälte PartG mbB
(86) International application number: PCT/JP2024/011338
(87) International publication number: WO 2024/247452

(57) **Abstract**

A computation device includes a reception unit 10 that receives an input value from a sensor S, a data group storage unit 40 that stores a data group including a plurality of input values acquired in advance, a statistical distance calculation unit 50 that calculates a statistical distance of the input value received by the reception unit 10 with respect to the data group, a smoothing processing unit 20 that performs smoothing processing on the input value received by the reception unit 10, a determination unit 70 that determines whether or not the statistical distance satisfies a predetermined condition, and a formula changing unit 80 that changes a computational formula used in the smoothing processing from a first computational formula used in a case where the statistical distance satisfies the predetermined condition to a second computational formula having higher followability in a case where the statistical distance does not satisfy the predetermined condition.

## Description

### Technical Field

The present invention relates to a computation device, a computation method, and a computation program.

### Background Art

For example, as disclosed in Patent Literature 1, in the case of monitoring a value detected by various sensors such as monitoring internal pressure with a pressure sensor provided in a semiconductor process chamber, since raw data output from the sensor includes noise, smoothing processing such as applying a moving average to the raw data is sometimes performed before displaying it.

In a computational formula used for the smoothing processing, when an input value as the raw data is stable, it is necessary that an output value to be displayed is also stable. From this viewpoint, for example, a computational formula having a large number of moving averages, which can ensure the stability of the output value, is desirable.

On the other hand, when the computational formula having a large number of moving averages is used, for example, when the setting changes during the processing and the input value fluctuates, there arises a problem that the output value to be displayed does not quickly follow the input value, and the required followability cannot be secured.

As described above, in the computational formula used for the smoothing processing, the stability of the output value and followability are in a trade-off relationship.

### Citation List

### Patent Literature

Patent Literature 1: JP 2023-54358 A

### Summary of Invention

### Technical Problem

Under such circumstances, the inventor of the present application has studied monitoring the fluctuation amount of the input value in order to improve both the stability and the followability, and performing smoothing processing using a computational formula having high stability in a case where the fluctuation amount is less than a threshold, and switching to a computational formula having high followability in a case where the fluctuation amount exceeds the threshold.

However, for example, in a case where the fluctuation of the input value is gentle or the fluctuation amount of the input value is small, such as the internal pressure of the semiconductor process chamber, it is difficult to set the threshold so that the fluctuation can be captured, and the switching of the computational formula described above cannot be appropriately performed.

Therefore, the present invention has been made to solve the above problems, and it is a main object thereof to improve both stability and followability of an output value obtained by subjecting an input value to smoothing processing even in a case where the fluctuation of the input value is gentle or a fluctuation amount of the input value is slight.

### Solution to Problem

That is, a computation device according to the present invention includes a reception unit that receives an input value from a sensor, a data group storage unit that stores a data group including a plurality of input values acquired in advance, a statistical distance calculation unit that calculates a statistical distance of the input value received by the reception unit with respect to the data group, a smoothing processing unit that performs smoothing processing on the input value received by the reception unit, a determination unit that determines whether or not the statistical distance satisfies a predetermined condition, and a formula changing unit that changes a computational formula used in the smoothing processing from a first computational formula used in a case where the statistical distance satisfies the predetermined condition to a second computational formula having higher followability in a case where the statistical distance does not satisfy the predetermined condition.

With the computation device configured as described above, since the statistical distance of the input value received by the reception unit is calculated to increase a feature amount with respect to the fluctuation of the input value, it is possible to capture a gentle fluctuation or a slight fluctuation of the input value.

Moreover, the computational formula used in the smoothing processing is changed from the first computational formula used in a case where the statistical distance satisfies the predetermined condition to the second computational formula having higher followability in a case where the statistical distance does not satisfy the predetermined condition. Therefore, even in a case where the fluctuation of the input value is gentle or a fluctuation amount of the input value is slight, it is possible to improve both stability and followability of the output value obtained by performing the smoothing processing on the input value while capturing the fluctuation.

Meanwhile, if the noise of the sensor is large and the statistical distance calculated by the statistical distance calculation unit greatly fluctuates each time it is calculated, when the input value fluctuates and it is necessary to switch to the second computational formula, there is a possibility that the statistical distance rapidly becomes a small value and satisfies a predetermined condition, for example. In this case, the computational formula cannot be appropriately switched.

Accordingly, it is preferable to further include a second smoothing processing unit that performs smoothing processing on the statistical distance calculated by the statistical distance calculation unit, and the determination unit determines whether or not the statistical distance smoothed by the second smoothing processing unit satisfies the predetermined condition.

With the statistical distance subjected to the smoothing processing as described above, the computational formula can be appropriately changed without rapidly becoming a small value when the input value fluctuates.

Here, when the value detected by the sensor is monitored and when the input value constituting the data group is acquired, for example, in a case where the set pressure of the chamber in which the sensor is provided is different, the input value received by the reception unit mostly deviates from the data group, and there is a concern that the statistical distance is continuously calculated excessively.

Accordingly, it is preferable that the statistical distance calculation unit calculates a statistical distance of a corrected input value obtained by performing a predetermined correction operation on the input value received by the reception unit with respect to the data group.

In this case, it is possible to prevent the statistical distance from being excessively calculated by appropriately setting the correction value.

In a case where the statistical distance does not satisfy the predetermined condition, the formula changing unit preferably changes the first computational formula to the second computational formula by correcting a coefficient included in the first computational formula.

With such a configuration, computation processing can be simplified as compared with the case of using separate computational formulas that are not related to each other as the first computational formula and the second computational formula.

In a case where the statistical distance does not satisfy the predetermined condition, the formula changing unit preferably changes the first computational formula to the second computational formula by correcting the coefficient included in the first computational formula to another value according to the statistical distance.

With such a configuration, the followability can be further improved by increasing the coefficient as the statistical distance increases.

Preferably, the smoothing processing unit performs Kalman filter processing on the input value, and the coefficient is a weighting coefficient multiplied by a difference between the input value input to the smoothing processing unit and an output value output from the smoothing processing unit before the input.

With such a configuration, by correcting the weighting coefficient, followability can be improved without changing, for example, a Kalman gain or the like used for the Kalman filter processing.

As a specific aspect of the statistical distance calculation unit, there is an aspect in which a Mahalanobis distance for the data group of the input value received by the reception unit is calculated as the statistical distance.

Meanwhile, a capacitive pressure sensor measures a displacement amount of a diaphragm that deforms according to a change in pressure as a change in capacitance and converts the displacement amount into a pressure, and is susceptible to noise due to vibration of the diaphragm. However, the above-described smoothing processing is more difficult.

Accordingly, a pressure measurement device according to the present invention includes the above-described computation device and a pressure sensor that outputs pressure as the input value.

With the pressure measurement device configured as described above, it is possible to improve both the stability and the followability of the output value obtained by subjecting an input value from the pressure sensor to smoothing processing, so that the pressure measurement device according to the present invention contributes to, for example, monitoring the internal pressure of the semiconductor process chamber.

A computation method according to the present invention includes a reception step of receiving an input value from a sensor, a data group storage step of storing a data group including a plurality of input values acquired in advance, a statistical distance calculation step of calculating a statistical distance of the input value received in the reception step with respect to the data group, a smoothing processing step of performing smoothing processing on the input value received in the reception step, a determination step of determining whether or not the statistical distance satisfies a predetermined condition, and a formula changing step of changing a computational formula used in the smoothing processing from a first computational formula used in a case where the statistical distance satisfies the predetermined condition to a second computational formula having higher followability in a case where the statistical distance does not satisfy the predetermined condition.

A computation program according to the present invention causes a computer to function as a reception unit that receives an input value from a sensor, a data group storage unit that stores a data group including a plurality of input values acquired in advance, a statistical distance calculation unit that calculates a statistical distance of the input value received by the reception unit with respect to the data group, a smoothing processing unit that performs smoothing processing on the input value received by the reception unit, a determination unit that determines whether or not the statistical distance satisfies a predetermined condition, and a formula changing unit that changes a computational formula used in the smoothing processing from a first computational formula used in a case where the statistical distance satisfies the predetermined condition to a second computational formula having higher followability in a case where the statistical distance does not satisfy the predetermined condition.

According to such a computation method and computation program, it is possible to achieve operational effects similar to those of the above-described computation device.

### Advantageous Effects of Invention

According to the present invention configured as described above, even in a case where the fluctuation of an input value is gentle or the fluctuation amount of the input value is slight, both stability and followability of the output value obtained by subjecting the input value to smoothing processing can be improved.

### Brief Description of Drawings

FIG. 1 is a schematic diagram illustrating a usage example of a computation device in an embodiment of the present invention.
FIG. 2 is a functional block diagram illustrating functions of the computation device of the embodiment.
FIG. 3 is a flowchart illustrating an operation of the computation device of the embodiment.
FIG. 4 is a mathematical expression indicating a calculation formula used in a statistical distance calculation unit of the embodiment.
FIG. 5 is a schematic diagram illustrating a function of a second smoothing processing unit of the embodiment.
FIG. 6 is a mathematical expression indicating a computational formula used in a smoothing processing unit of the embodiment.
FIG. 7 is a graph illustrating improvement in followability by the computation device according to the embodiment.
FIG. 8 is a graph illustrating improvement in stability by the computation device of the embodiment.

### Description of Embodiments

Hereinafter, an embodiment of a computation device according to the present invention will be described with reference to the drawings.

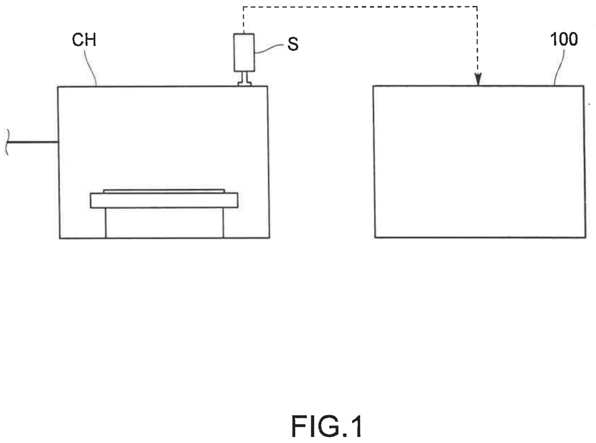

The computation device 100 of the present embodiment is used, for example, in a semiconductor manufacturing process, and is for monitoring a detected value such as pressure detected by, for example, a capacitive pressure sensor S provided in a semiconductor process chamber CH as illustrated in FIG. 1. Note that the computation device 100 and the pressure sensor S constitute a pressure measurement device that detects and outputs the pressure of the chamber CH or the like.

However, the application of the computation device 100 is not limited to the semiconductor manufacturing process, and the detected value may be a pressure output from a pressure sensor S of a type different from the capacitance type, or is not limited to the pressure, and may be various physical quantities output from various sensors S such as a temperature sensor, a humidity sensor, a distance sensor, or a speed sensor.

The computation device 100 smooths and displays an input value from the sensor S (in other words, an output value output from the sensor S is raw data output from the sensor S), and is specifically a computer including a CPU, a memory, an input/output interface, and the like.

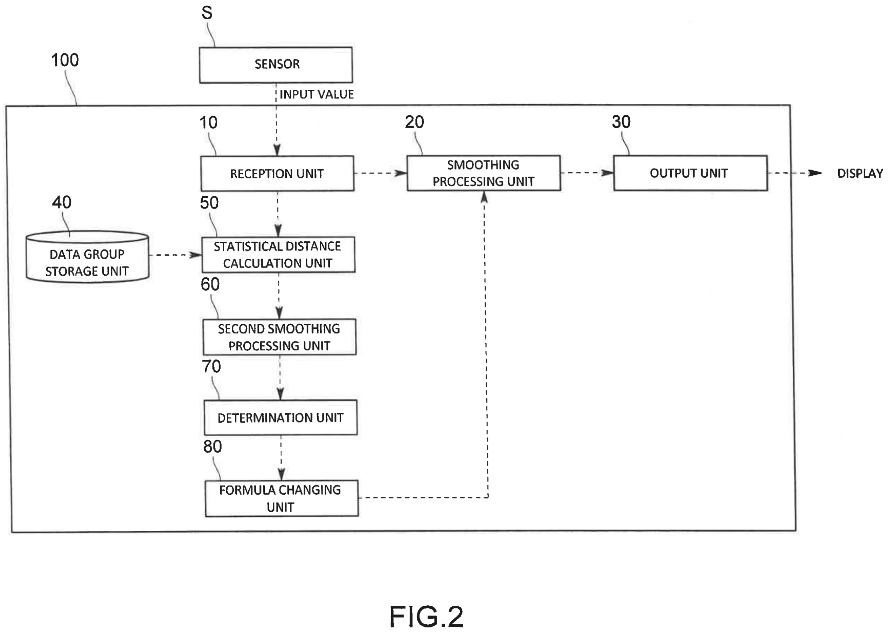

More specifically, the computation device 100 of the present embodiment includes a reception unit 10 that receives the input value from the sensor S, a smoothing processing unit 20 that performs smoothing processing on an input value received by the reception unit 10, and an output unit 30 that displays the input value after the smoothing processing by the smoothing processing unit 20 on a display or the like as an output value, as illustrated in FIG. 2, by cooperation of the CPU and its peripheral devices according to a computation program stored in the memory.

Then, the computation device 100 is configured to use at least two computational formulas (hereinafter, referred to as a first computational formula and a second computational formula) as the computational formulas used for the smoothing processing.

Here, focusing on the stability and the followability of the computational formula, the first computational formula is a formula having higher stability than the second computational formula and lower followability than the second computational formula. In other words, the second computational formula is a formula having higher followability than the first computational formula and lower stability than the first computational formula.

The stability of the computational formula is an index indicating the stability of the output value when the input value is stable, and the followability of the computational formula is an index indicating the response speed of the output value when the input value fluctuates. Note that a case where the input value is stable is, for example, a case where there is no change in various settings and the fluctuation amount or the fluctuation rate of the input value is less than a predetermined value, and conversely, a case where the input value varies is a case where the fluctuation amount or the fluctuation rate of the input value exceeds a predetermined value due to, for example, a change in at least one of various settings.

The computation device 100 of the present embodiment further includes functions as a data group storage unit 40, a statistical distance calculation unit 50, a second smoothing processing unit 60, a determination unit 70, and a formula changing unit 80 as illustrated in FIG. 2 by cooperation of a CPU and its peripheral devices according to a computation program stored in the memory.

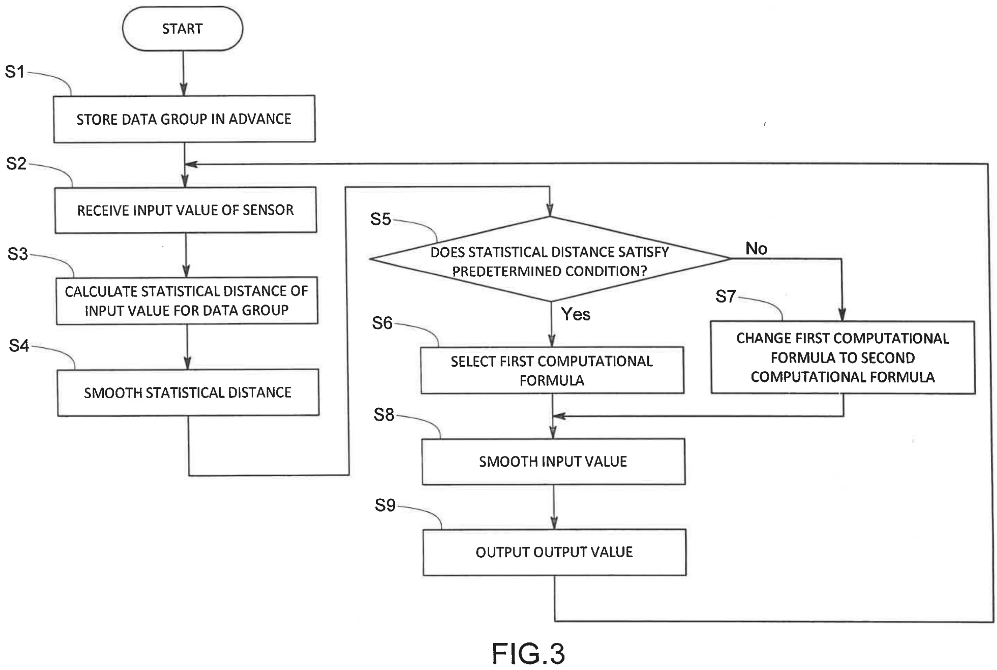

Hereinafter, the operation of the computation device 100 will be described with reference to a flowchart of FIG. 3 to also describe these functions.

The data group storage unit 40 is set in a predetermined area of the memory, acquires a large number of input values output from the sensor S in advance, and stores a data group including the large number of input values (S1).

This data group is constituted by input values when the computation device is stable, and is acquired, for example, at the time of factory shipment of the computation device 100 or at the time of calibration at a use site. The data group here includes a large number of input values (in other words, a large number of output values from the sensor S) acquired when maintaining the pressure in the chamber CH at a predetermined value such as 0 Pa, for example.

In the present embodiment, the reception unit 10 sequentially receives the input value from the sensor S (S2).

Then, the statistical distance calculation unit 50 calculates a statistical distance of the input value received by the reception unit 10 with respect to the data group. Note that the statistical distance indicates how much the input value deviates from the data group on the basis of the average value and variance (degree of variation) of the data group described above.

The statistical distance calculation unit 50 of the present embodiment sequentially calculates, as a statistical distance, a Mahalanobis distance representing a measure between the input value received by the reception unit 10 and the distribution of the input values constituting the data group described above (S3).

The statistical distance calculation unit 50 is configured to calculate the statistical distance using a predetermined statistical distance calculation formula. Examples of the statistical distance calculation formula include a formula including the average value and the variance of the data group as parameters. Note that this statistical distance calculation formula is stored in advance in a calculation formula storage unit (not illustrated) set in a predetermined area of the memory. However, a specific calculation method of the statistical distance calculation unit 50 is not limited to the above-described method, and may be, for example, a method of calculating by using a differential value and/or an integral value of an input value at regular intervals.

Meanwhile, while the above-described data group is acquired when the pressure in the chamber CH is to be maintained at 0 Pa here, when the pressure in the chamber CH is to be maintained at a pressure different from 0 Pa, the input value at that time mostly deviates from the data group, and the Mahalanobis distance continues to be calculated excessively.

Accordingly, the statistical distance calculation unit 50 may calculate the statistical distance of the input value itself with respect to the data group. However, in order to prevent the above-described Mahalanobis distance from being excessively calculated, in this embodiment, the input value is corrected, and the statistical distance of the corrected input value with respect to the data group is calculated.

That is, the statistical distance calculated by the statistical distance calculation unit 50 is a concept including not only the statistical distance of the input value itself with respect to the data group but also the statistical distance of a corrected input value obtained by performing arithmetic calculations on a predetermined correction value with respect to the data group.

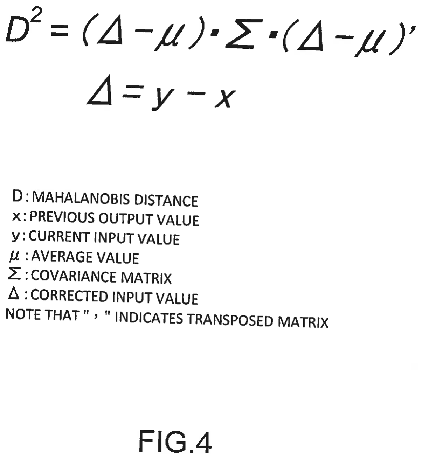

Specifically, as illustrated in the equation of FIG. 4, the Mahalanobis distance for the data group of the corrected input value Δ is calculated by performing correction of subtracting an output value x output by the statistical distance calculation unit 50 before the input from an input value y to the statistical distance calculation unit 50.

More specifically, the statistical distance calculation unit 50 of the present embodiment calculates a value obtained by subtracting the output value x from the smoothing processing unit 20 at the time k-1 from the input value y at the time k, and calculates the Mahalanobis distance for the data group of the corrected input value Δ.

Next, in this embodiment, the second smoothing processing unit 60 performs smoothing processing on the statistical distance calculated by the statistical distance calculation unit 50 (S4).

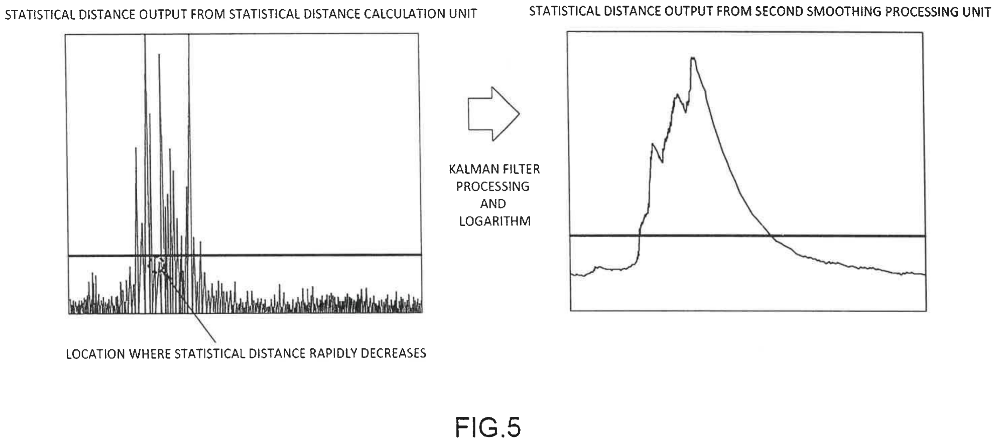

The second smoothing processing unit 60 performs smoothing processing on the statistical distance output from the statistical distance calculation unit 50, and sequentially outputs the statistical distance to the determination unit 70 to be described later. Here, as illustrated in FIG. 5, the statistical distance is subjected to Kalman filter processing, and a logarithmic statistical distance obtained after the processing is output to the determination unit 70.

However, a specific aspect of the smoothing processing is not necessarily limited to the Kalman filter processing, and may be various aspects such as a moving average, and it is not always necessary to take the logarithm of the statistical distance after the processing, and the statistical distance subjected to the smoothing processing may be output as it is to the determination unit 70.

Subsequently, the determination unit 70 determines whether or not the statistical distance output by the second smoothing processing unit 60 satisfies a predetermined condition (S5).

The determination unit 70 according to the present embodiment determines whether or not the statistical distance output by the second smoothing processing unit 60 exceeds a predetermined threshold. In a case where the statistical distance falls below the threshold, the determination unit determines that the predetermined condition is satisfied. In a case where the statistical distance exceeds the threshold, the determination unit determines that the predetermined condition is not satisfied. Note that this threshold is stored in advance in a threshold storage unit (not illustrated) set in a predetermined area of the memory.

Specifically, the determination unit 70 sequentially compares the statistical distance output from the second smoothing processing unit 60 with the threshold, and sequentially outputs a signal indicating that the statistical distance is below the threshold or a signal indicating that the statistical distance exceeds the threshold to the formula changing unit 80 as a determination result.

The formula changing unit 80 changes a computational formula used by the smoothing processing unit 20 described above to the first computational formula or the second computational formula on the basis of the determination result of the determination unit 70.

Specifically, the formula changing unit 80 receives the signal indicating the determination result from the determination unit 70, and selects the first computational formula as the computational formula to be used by the smoothing processing unit 20 in a case where the statistical distance output by the second smoothing processing unit 60 is less than the threshold (that is, in a case where the statistical distance satisfies the predetermined condition) (S6).

On the other hand, the formula changing unit 80 receives the signal indicating the determination result from the determination unit 70, and changes the computational formula used in the smoothing processing unit 20 from the first computational formula to the second computational formula having higher followability in a case where the statistical distance output by the second smoothing processing unit 60 exceeds the threshold (that is, in a case where the statistical distance does not satisfy the predetermined condition) (S7).

More specifically, in a case where the statistical distance exceeds the threshold, the formula changing unit 80 changes the computational formula used for the smoothing processing unit 20 from the first computational formula to the second computational formula by correcting a coefficient included in the first computational formula.

Here, the smoothing processing unit 20 of the present embodiment is configured to perform the Kalman filter processing on the input value received by the reception unit 10.

The Kalman filter processing is smoothing processing for outputting an estimated value of an input value at the time k, in other words, smoothing processing for outputting an estimated value of an output value at the time k output from the sensor S described above.

Specifically, the smoothing processing unit 20 outputs the estimated value of the input value at the time k by using a preliminary estimated value at the time k estimated using the data up to the time k-1 and the input value at the time k.

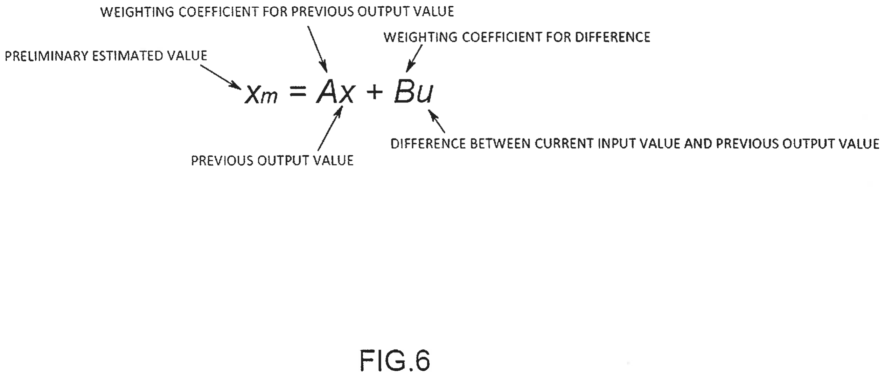

More specifically, in the process of calculating the estimated value of the input value at the time k (that is, the process of performing Kalman processing on the input value at the time k), the smoothing processing unit 20 calculates the preliminary estimated value at the time k described above using the computational formula illustrated in FIG. 6, and outputs the preliminary estimated value of the input value at the time k using the preliminary estimated value, Kalman gain, and the like.

As can be seen from the computational formula of FIG. 6, a preliminary estimated value xₘ is a value xₘ obtained by adding a difference u between the current input value input to the smoothing processing unit 20 and the previous output value output from the smoothing processing unit 20 to the previous output value x (that is, the previous output value x obtained by the Kalman filter processing of the smoothing processing unit 20) output from the smoothing processing unit 20.

Note that the difference u is not limited to the difference between the current input value and the previous output value, and may be, for example, a difference between the current input value and the output from the second previous iteration or earlier, and only needs to be a difference between the input value input to the smoothing processing unit 20 and the output value output from the smoothing processing unit 20 before the input.

The computational formula of the present embodiment includes a weighting coefficient A for weighting the previous output value x and a weighting coefficient B for weighting the difference u between the current input value and the previous output value, and a sum of a value obtained by multiplying the previous output value x by the weighting coefficient A and a value obtained by multiplying the difference u between the current input value and the previous output value by the weighting coefficient B is output as an output value. Note that the weighting coefficients A and B are values equal to or more than 0 and equal to or less than 1.

In such a configuration, the formula changing unit 80 changes the computational formula used for the smoothing processing unit 20 to either the first computational formula or the second computational formula by correcting the weighting coefficient B multiplied by the difference u between the input value input to the smoothing processing unit 20 and the output value output from the smoothing processing unit 20 before the input.

Specifically, the formula changing unit 80 is configured to change the first computational formula to the second computational formula by correcting the weighting coefficient B included in the first computational formula to another value according to the statistical distance in a case where the statistical distance exceeds the threshold (that is, in a case where the statistical distance does not satisfy the predetermined condition).

That is, in a case where the statistical distance is less than the threshold, the computational formula including the weighting coefficient B as a predetermined fixed value is used as the first computational formula, and in a case where the statistical distance exceeds the threshold, the computational formula obtained by correcting the weighting coefficient B to a value larger than the fixed value as the statistical distance is larger is used as the second computational formula. Note that, as described above, the weighting coefficient B is a value equal to or more than 0 and equal to or less than 1.

Thereafter, the smoothing processing unit 20 performs smoothing processing on the input value by using the first computational formula selected by the formula changing unit 80 or the second computational formula switched by the formula changing unit 80 (S8), and the output unit 30 displays and outputs the smoothed value on a display or the like as an output value (S9).

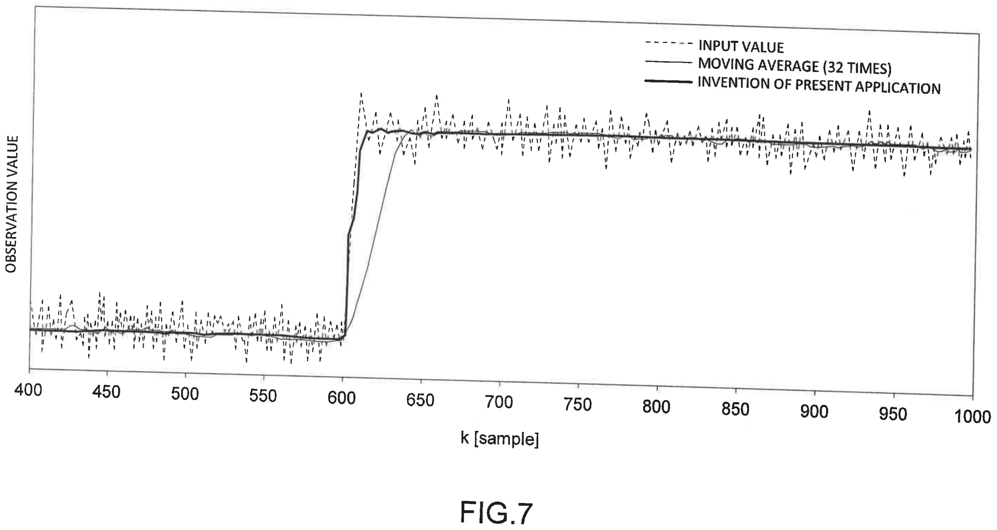

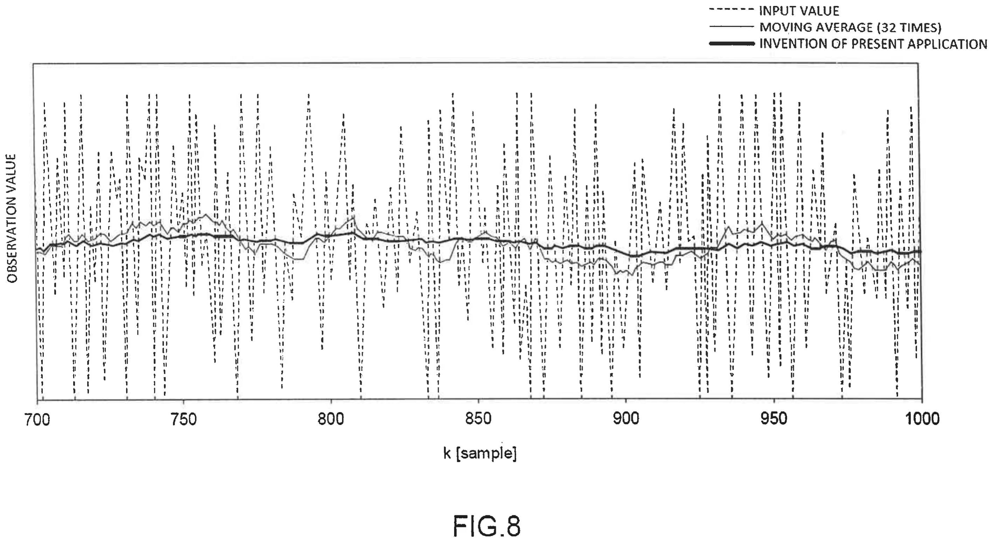

Here, operational effects of the computation device 100 of the present embodiment are illustrated in graphs of FIGS. 7 and 8. According to the computation device 100 of the present embodiment, as can be seen from FIG. 7, the followability of the output value when the input value fluctuates is improved, and as can be seen from FIG. 8, the stability of the output value when the input value is stable is also improved, as compared with the smoothing processing by 32 times of moving averaging, for example.

According to the computation device 100 configured as described above, since the statistical distance of the input value received by the reception unit 10 is calculated to increase a feature amount with respect to the fluctuation of the input value, it is possible to capture a gentle fluctuation or a slight fluctuation of the input value.

In addition, in a case where the statistical distance exceeds the threshold (that is, in a case where the statistical distance does not satisfy the predetermined condition), the computational formula used in the smoothing processing is changed from the first computational formula used in a case where the statistical distance falls below the threshold (that is, in a case where the statistical distance satisfies the predetermined condition) to the second computational formula with higher followability. Thus, even in a case where the input value fluctuates gently or the fluctuation amount of the input value is small, it is possible to improve both the stability and the followability of the output value obtained by subjecting the input value to smoothing processing while capturing the fluctuation.

Further, in a case where the statistical distance exceeds the threshold, the formula changing unit 80 changes the first computational formula to the second computational formula by correcting the coefficients included in the computational formula, and thus it is possible to simplify the computation processing as compared with the case of using unrelated computational formulas as these computational formulas.

Furthermore, in a case where the statistical distance exceeds the threshold, the formula changing unit 80 increases the weighting coefficient B included in the above-described computational formula as the statistical distance increases, so that the followability can be further improved.

In addition, since the formula changing unit 80 is configured to correct the weighting coefficient multiplied by the difference between the input value input to the smoothing processing unit 20 and the output value output from the smoothing processing unit 20 before the input, the followability can be improved without changing the computational formula (for example, Kalman gain or the like) used for the Kalman filter processing.

Meanwhile, as illustrated in the left graph of FIG. 5, the statistical distance calculated by the statistical distance calculation unit 50 fluctuates. However, when the input value fluctuates and the computational formula needs to be changed to the second computational formula, there is a possibility that the statistical distance suddenly becomes a small value and falls below the threshold (a portion surrounded by a dotted line in the left graph of FIG. 5). In this case, the computational formula cannot be appropriately changed.

On the other hand, since the computation device 100 of the present embodiment includes the second smoothing processing unit 60 that performs the smoothing processing on the statistical distance calculated by the statistical distance calculation unit 50, the statistical distance that has been smoothed does not rapidly become a small value when the input value fluctuates, and the computational formula can be appropriately changed.

Furthermore, since the computation device 100 of the present embodiment smooths and outputs the pressure output from the pressure sensor S, it contributes to monitoring the internal pressure of the semiconductor process chamber CH.

Note that the present invention is not limited to the above embodiments.

For example, in the above embodiment, the formula changing unit 80 changes the first computational formula to the second computational formula by correcting the coefficient included in the computational formula. However, for example, the formula changing unit may change the first computational formula to the second computational formula by changing the Kalman gain, or may change the first computational formula to another second computational formula that is completely different (without a common term).

In addition, the correction of the coefficient included in the computational formula is not limited to the aspect of the above embodiment, and the formula changing unit 80 may be configured to correct the coefficient included in the first computational formula to another fixed value in a case where the statistical distance exceeds the threshold.

A specific aspect in this case may be an aspect in which the fixed value of the weighting coefficient B included in the second computational formula is larger than the fixed value of the weighting coefficient B included in the first computational formula.

With such a configuration, the load of the computation processing can be reduced as compared with the aspect of the embodiment in which the coefficient is corrected according to the statistical distance.

The smoothing processing unit 20 performs Kalman processing on the input value in the above embodiment, but may perform smoothing by taking a moving average.

The computation device 100 may not have a function as the second smoothing processing unit 60, and may directly output the statistical distance calculated by the statistical distance calculation unit 50 to the determination unit 70.

Further, in the above embodiment, as the determination as to whether or not the statistical distance satisfies the predetermined condition, the mode of determining whether or not the statistical distance is less than the threshold has been described. However, for example, a mode of determining whether or not the fluctuation amount or the fluctuation rate of the statistical distance is less than the threshold may be used.

In addition, in the above-described embodiment, the Mahalanobis distance has been described as an example, but the statistical distance may be, for example, an index obtained by machine learning such as a support vector machine (SVM), or an index such as an Akaike information criterion (AIC) or a Bayesian information criterion (BIC).

In addition, the present invention is not limited to the above embodiment, and it goes without saying that various modifications can be made without departing from the gist of the present invention.

### Industrial Applicability

According to the present invention, it is possible to improve both stability and followability of an output value obtained by subjecting an input value to smoothing processing even in a case where the fluctuation of the input value is gentle or a fluctuation amount of the input value is slight.

### Reference Signs List

- 100: computation device
- CH: chamber
- S: sensor
- 10: reception unit
- 20: smoothing processing unit
- 30: output unit
- 40: data group storage unit
- 50: statistical distance calculation unit
- 60: second smoothing processing unit
- 70: determination unit
- 80: formula changing unit

## Claims

1. A computation device comprising:
a reception unit that receives an input value from a sensor;
a data group storage unit that stores a data group including a plurality of input values acquired in advance;
a statistical distance calculation unit that calculates a statistical distance of the input value received by the reception unit with respect to the data group;
a smoothing processing unit that performs smoothing processing on the input value received by the reception unit;
a determination unit that determines whether or not the statistical distance satisfies a predetermined condition; and
a formula changing unit that changes a computational formula used in the smoothing processing from a first computational formula used in a case where the statistical distance satisfies the predetermined condition to a second computational formula having higher followability in a case where the statistical distance does not satisfy the predetermined condition.

2. The computation device according to claim 1, further comprising a second smoothing processing unit that performs smoothing processing on the statistical distance calculated by the statistical distance calculation unit, wherein
the determination unit determines whether or not the statistical distance smoothed by the second smoothing processing unit satisfies the predetermined condition.

3. The computation device according to claim 1 or 2, wherein the statistical distance calculation unit calculates a statistical distance of a corrected input value obtained by performing a predetermined correction operation on the input value received by the reception unit with respect to the data group.

4. The computation device according to any one of claims 1 to 3, wherein in a case where the statistical distance does not satisfy the predetermined condition, the formula changing unit changes the first computational formula to the second computational formula by correcting a coefficient included in the first computational formula.

5. The computation device according to claim 4, wherein in a case where the statistical distance does not satisfy the predetermined condition, the formula changing unit changes the first computational formula to the second computational formula by correcting the coefficient included in the first computational formula to another value according to the statistical distance.

6. The computation device according to claim 4 or 5, wherein
the smoothing processing unit performs Kalman filter processing on the input value, and
the coefficient is a weighting coefficient multiplied by a difference between the input value input to the smoothing processing unit and an output value output from the smoothing processing unit before the input.

7. The computation device according to any one of claims 1 to 6, wherein the statistical distance calculation unit calculates a Mahalanobis distance for the data group of the input value received by the reception unit as the statistical distance.

8. A pressure measurement device comprising:
the computation device according to any one of claims 1 to 7; and
a pressure sensor that outputs pressure as the input value.

9. A computation method comprising:
a reception step of receiving an input value from a sensor;
a data group storage step of storing a data group including a plurality of input values acquired in advance;
a statistical distance calculation step of calculating a statistical distance of the input value received in the reception step with respect to the data group;
a smoothing processing step of performing smoothing processing on the input value received in the reception step;
a determination step of determining whether or not the statistical distance satisfies a predetermined condition; and
a formula changing step of changing a computational formula used in the smoothing processing from a first computational formula used in a case where the statistical distance satisfies the predetermined condition to a second computational formula having higher followability in a case where the statistical distance does not satisfy the predetermined condition.

10. A computation program causing a computer to function as:
a reception unit that receives an input value from a sensor;
a data group storage unit that stores a data group including a plurality of input values acquired in advance;
a statistical distance calculation unit that calculates a statistical distance of the input value received by the reception unit with respect to the data group;
a smoothing processing unit that performs smoothing processing on the input value received by the reception unit;
a determination unit that determines whether or not the statistical distance satisfies a predetermined condition; and
a formula changing unit that changes a computational formula used in the smoothing processing from a first computational formula used in a case where the statistical distance satisfies the predetermined condition to a second computational formula having higher followability in a case where the statistical distance does not satisfy the predetermined condition.
